Europäisches Patentamt

(19) European Patent Office

Office européen des brevets

(11) Publication number: **0 269 460**
**A2**

(12) # EUROPEAN PATENT APPLICATION

(21) Application number: **87310499.6**

(51) Int. Cl.⁴: **A 23 L 1/31**

(22) Date of filing: **27.11.87**

(30) Priority: **28.11.86 GB 8628488**

(43) Date of publication of application:
**01.06.88 Bulletin 88/22**

(84) Designated Contracting States:
**AT BE CH DE ES FR GB GR IT LI LU NL SE**

(71) Applicant: **JOHNSON & JOHNSON**
**One Johnson & Johnson Plaza**
**New Brunswick, NJ 08933-7003  (US)**

(72) Inventor: **Holt, Alan**
**11 Manor Road**
**Salford Manchester M6 8QN  (GB)**

**Holt, Roger James**
**11 Orama Avenue**
**Salford Manchester M6 8LL  (GB)**

(74) Representative: **Fisher, Adrian John et al**
**CARPMAELS & RANSFORD 43 Bloomsbury Square**
**London WC1A 2RA  (GB)**

㉞ **Edible product.**

㊲  A body of edible material 10 is sliced and wrapped by an inner layer of basting and/or flavouring material 14a and an outer layer of collagen film 14b. The material 14a of the inner layer may comprise fat, gravy, or any sauce, paste or other spreadable composition of fruits, vegetables, spices and seasonings, or any combination of these substances, and during cooking or heating this material tends to percolate between the slices.

Fig. 2

EP 0 269 460 A2

**Description**

EDIBLE PRODUCT

This invention relates to an edible product which is particularly suitable for use in mass catering.

The use of a layer of fat supported upon a film of collagen, or between two such films, as a basting wrap for joints of meat is disclosed in U.K. Patent No. 2105168 standing in the name of one of the present inventors. In that case, the purpose of the collagen is to maintain the integrity of the fat, which has been comminuted. The fat layer gradually melts away during cooking leaving the collagen layer or layers adhering to the cooking joint, perhaps having some aesthetic appeal.

The present invention is a development of the concept of use of a wrap including collagen film, but is not restricted to use of fat as part of the wrap, nor to use solely on joints of meat, or other meat products.

According to the present invention, an edible product comprises a body of edible material which is sliced and wrapped by an inner layer of basting and/or flavouring material and an outer layer of collagen.

In our co-pending application (Serial No.    ) a method is disclosed of forming a coherent body of meat by applying an emulsion of comminuted connective tissue to pieces of lean meat (both the connective tissue and said pieces preferably being derived from the same cuts of natural muscle) so that the emulsion coats the pieces and serves to bind them together when the resultant mass is moulded by extrusion and/or by packing into a mould. The present invention may be applied to a coherent meat body of this type in that it may be frozen, sliced and wrapped by basting and/or flavouring material and an outer layer of collagen. However, the invention may equally well be applied to any other meat product, such as a joint, or re-constituted meat body, and also to other food products, such as puddings or moulded bodies formed of cereals, nuts pulses and/or vegetables. In this respect, with a meat product the inner layer may comprise fat, fat mixed with herbs, spices or other flavourings, gravy, or an appropriate sauce, paste or puree, e.g. curry, tomato or any combination of these. With a pudding, the inner layer of the wrap may suitably comprise jam or honey, or a fruit puree, or a nut paste, and with a vegetarian mould, many types of sauce, paste or puree may be suitable.

The body of edible material may firstly be frozen to facilitate slicing.

The wrapping layers are advantageously applied to the pre-sliced body in the form of a coherent drape or sheet consisting of either a layer of basting and/or flavouring material adhered to a supporting layer of collagen film, or a layer of basting and/or flavouring material sandwiched between two layers of collagen film.

In carrying out the present invention, if the drape is applied around the pre-sliced body so as to substantially completely surround the latter, the collagen film will function as a form of restraining spring acting on the slices as the enclosed product is cooked or heated, and the heat will cause the individual slices of the enclosed body to undulate, thereby allowing the basting and/or flavouring material from the drape to percolate between each slice. In other words, the collagen film, whilst in a hot and humid state, becomes springy and so holds the composite together, yet has sufficient tension and springiness to allow the slices to open and close together, throughout the cooking or heating process. With a meat body in particular this is most important to prevent undue or excessive dehydration during cooking. When the cooking or heating is completed, the collagen film becomes dehydrated and crispy, and holds the sliced pieces completely together. It is thus both possible and practicable to make presliced food products available to caterers and this has the advantage of offering a number of economies particularly in reducing cooking time, allowing a frozen pre-sliced product to be positioned ready for cooking without the need to defrost, and better control of the temperatures required to kill off any harmful bacteria. It allows for predetermination of the number of slices to be used per serving and thus the cooking or heating only of a precise quantity matched to any specific catering requirement. Also the exact cost of the slices can be calculated.

The invention will be described further, with reference to the accompanying drawing, in which:-

    Fig. 1 is a diagrammatic perspective view of a pre-sliced body of edible material;

    Fig. 2 is a view camparable with Fig. 1 but showing the body in the course of being enrobed to form a product in accordance with the invention; and

    Fig. 3 is a view comparable with Fig. 2 illustrating a modified embodiment of the product of the invention.

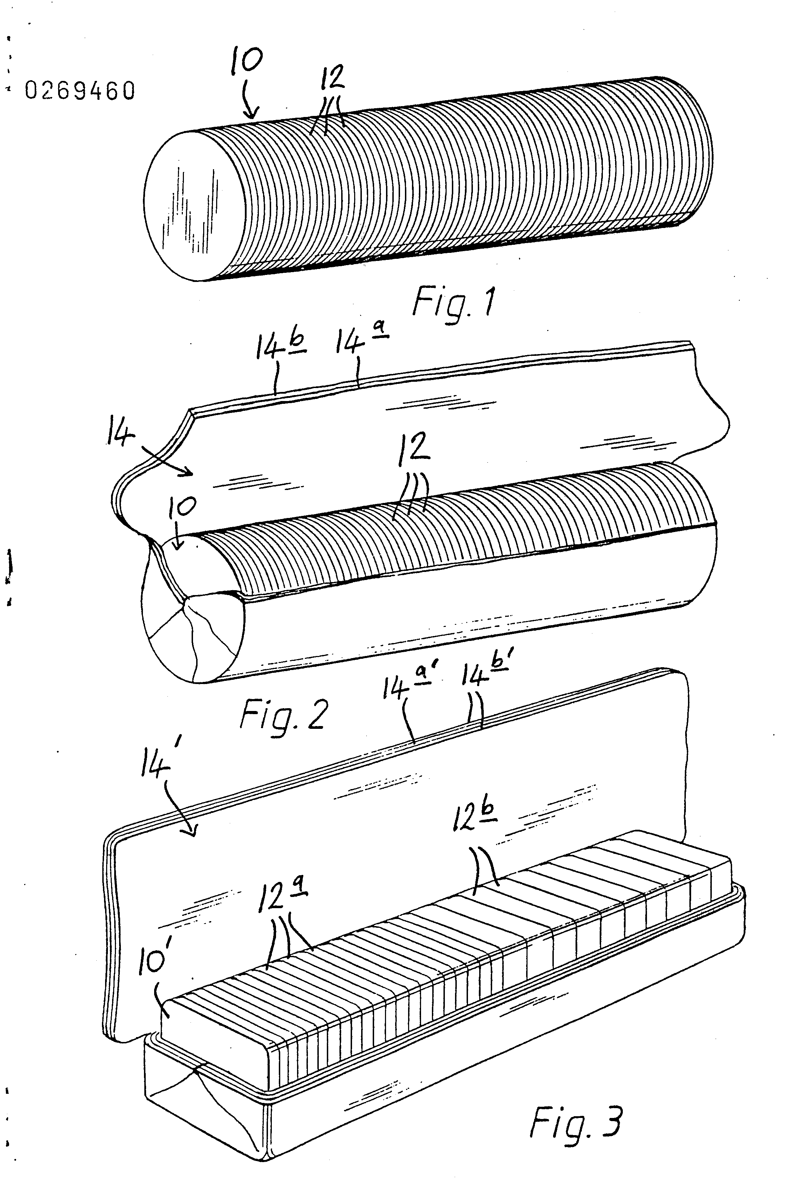

Fig. 1 represents any suitable elongate and generally cylindrical body 10 of food material to which the invention may be applied, and, for the sake of example, it may be taken to be either a re-constituted meat product or a partially cooked (steamed) suet pudding. The body 10 is firstly sliced and it may conveniently be chilled or frozen to facilitate slicing. The slices 12 are then reassembled to make up any desired length or weight.

In the case of the meat product, the sliced body 10 is then enrobed in a basting drape 14, consisting of a layer of fat 14a adhered to and supported by a film of collagen 14b. The drape 14 should be of sufficient length to extend well beyond the ends of the sliced body 10, so that the latter is completely encapsulated, and, as illustrated, the drape 14 is applied so that the fat 14a is innermost, in contact with the body 10 and the collagen 14b outermost. If the body 10 is frozen, the drape 14 will freeze on contact therewith.

As mentioned above, instead of fat, the inner layer 14b may comprise gravy, or a suitable sauce, or even a combination of two or more of these.

In the case of the suet pudding, the inner layer 14a of the drape 14b may comprise jam or fruit puree. Also, when the slices are reassembled, jam or puree may be spread therebetween.

When the enrobed body is cooked, each slice is individually cooked and the slices separate and close up again under the influence of the resilience of the collagen 14b of the drape 14 to permit the basting and/or flavouring material 14a to enter therebetween and assist in thorough and relatively rapid cooking right through the thickness of the body, as well as providing a coating to the slices which will be served individually.

Fig. 3 illustrates various modifications within the scope of the invention. Here the body 10' is roughly rectangular in cross-section rather than cylindrical, and the drape 14' consists of a layer of basting or flavouring material 14a' sandwiched between two films of collagen 14b'. Also, whereas in Fig. 1 and 2 the slices 12 of the body 10 are of approximately equal thickness, in Fig. 3 they are of differing thickness, one group of slices 12a at one end of the body 10 being of the same thickness, and another group of slices 12b at the other end of the body being two to three times as thick, but approximately equal to each other.

## Claims

1. An edible product comprising a body of edible material which is sliced and wrapped by an inner layer of basting and/or flavouring material and an outer layer of collagen.

2. A product as claimed in claim 1 wherein the body consists of pieces of lean meat bound together by an emulsion of connective tissue and this is wrapped by an inner basting layer of fat and an outer layer of collagen.

3. A product as claimed in claim 1 wherein the inner layer is flavouring material consisting of a sauce, paste or other spreadable composition made from any one of or any combination of fruits, vegetables, spices and/or seasonings.

4. A product as claimed in any preceding claim wherein the body is wrapped by a coherent drape consisting of either a layer of basting and/or flavouring material adhered to a supporting layer of collagen film, or a layer of basting and/or flavouring material sandwiched between two layers of collagen film.

5. A method of preparing a product as claimed in any preceding claim wherein a body of edible material is frozen, sliced and subsequently enrobed in a drape consisting of at least one layer of basting and/or flavouring material and at least one layer of collagen so that a layer of collagen is outermost in the final product.

Fig. 1

Fig. 2

Fig. 3